# EUROPÄISCHE PATENTSCHRIFT

(11) **EP 2 898 216 B1**
(45) Veröffentlichungstag und Bekanntmachung des Hinweises auf die Patenterteilung: **07.12.2016**
(21) Anmeldenummer: 13763023.2
(22) Anmeldetag: 10.09.2013
(51) Int. Cl.: F03D 80/00

(54) **VERFAHREN UND VORRICHTUNG ZUR ÜBERWACHUNG VON BETRIEBSZUSTÄNDEN VON ROTORBLÄTTERN**
METHOD AND DEVICE FOR MONITORING OPERATING STATES OF ROTOR BLADES
PROCÉDÉ ET DISPOSITIF PERMETTANT DE SURVEILLER LES ÉTATS DE FONCTIONNEMENT DE PALES DE ROTOR

(30) Priorität: 18.09.2012 DE 102012108776
(43) Veröffentlichungstag der Anmeldung: 29.07.2015
(73) Patentinhaber: Technische Universität München, 80333 München (DE)
(72) Erfinder: MÜLLER, Mathias, 81541 München (DE); WOJTECH, Rolf, 80689 München (DE); BUCK, Thorbjörn, 80636 München (DE)
(74) Vertreter: Zimmermann & Partner Patentanwälte mbB
(86) Internationale Anmeldenummer: PCT/EP2013/068705
(87) Internationale Veröffentlichungsnummer: WO 2014/044575

(56) Entgegenhaltungen:
- WO-A1-2007/131489
- WO-A2-2010/046403
- US-A1- 2004 057 828
- US-A1- 2009 180 875

## Beschreibung

### TECHNISCHES GEBIET

Die vorliegende Erfindung betrifft im Allgemein eine Überwachung des Betriebs von Windkraftanlagen, insbesondere die Überwachung des Zustands eines Rotorblatts von Windkraftanlagen. Die Erfindung betrifft insbesondere eine Anordnung von faseroptischen Sensoren zur Bestimmung des Zustands eines Rotorblatts einer Windenergieanlage.

### STAND DER TECHNIK

Zur Überwachung von Windenergieanlagen gewinnen Systeme, die den Zustand beurteilen an Bedeutung. Der Zustand eines Rotorblatts, also zum Beispiel Verschleiß, Materialermüdung und anderen Veränderungen, die durch Alterung oder Nutzung auftreten können, ist Gegenstand der Zustandsüberwachung von Windenergieanlagen. Durch die Kenntnis des Zustands können Wartungsarbeiten geplant werden, der gegenwärtige Wert der Anlage geschätzt werden und Sicherheitsauflagen des Gesetzgebers und Kunden erfüllt werden.

In existierenden Anlagen wird der Zustand zum Beispiel über Belastungszyklen geschätzt, wobei die Anzahl von Dehnungszyklen, Blattrotationen, d.h. Gravitationslastzyklen, oder Windböen etfasst werden. Zyklen können in Zeitintemallen, z.B. 10 min. anhand der maximalen Lastwerte in den Intervallen ermittelt werden, und der Zustand über die Anzahl der Zyklen mit einer bestimmten Belastung abgeschätzt wird.

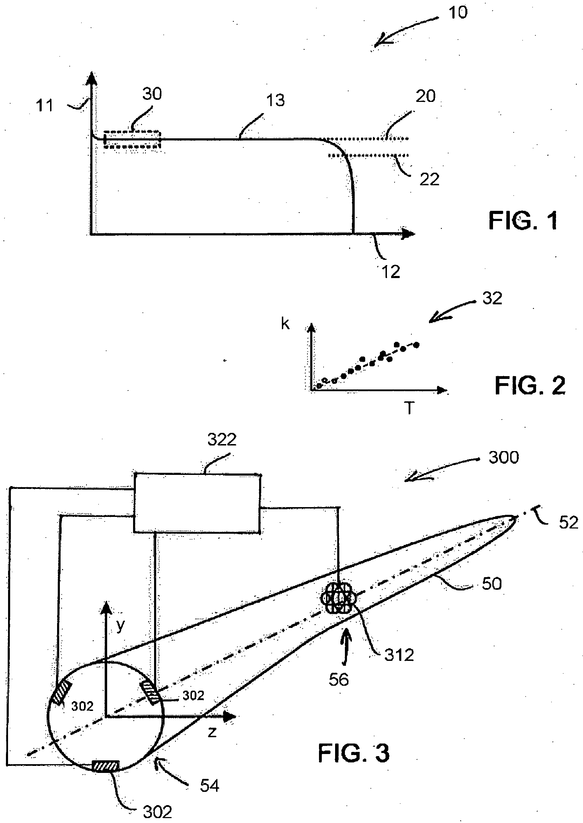

Zum Beispiel zeigt FIG. 1 Kurve 13: Diese illustriert die Steifigkeit eines Rotorblatts, aufgetragen entlang der Achse 11, als Funktion der Anzahl der Belastungszyklen bzw. als Funktion der Zeit auf der Achse 12. In einer relativ kurzen Zeitperiode nach der Inbetriebnahme nimmt die Steifigkeit zunächst ab, um dann für den regulären Betriebszustand, im Rahmen der Abhängigkeit von anderen Parametern wir Temperatur und Luftfeuchtigkeit, annährend konstant zu bleiben. Hat der Zustand des Rotorblattes einen kritischen Wert erreicht, d.h. liegt eine übermäßige Alterung, Belastung oder ähnliches vor, nimmt die Steifigkeit ab, wobei kurz darauf ein Materialversagen auftreten kann. Der Zustand der Steifigkeitsabnahme ist im Bereich zwischen Hilfslinie 20 und 22 dargestellt, wobei ab Hilfslinie 22 ein Materialversagen auftreten kann.

Die US 2009/180875 A1 beschreibt ein Verfahren zur Bestimmung der Ermüdungsbeanspruchung einer Windturbine und zur Ermüdungsbeanspruchungsteuerung sowie entsprechende Windturbinen. Das Verfahren zur Bestimmung der Ermüdungsbeanspruchung von einer in Betrieb befindlichen Windturbine umfasst ein Bereitstellen einer Übertragungsfunktion, die einen Messwert eines ersten Sensors mit einem Messwert eines zweiten Sensors verbindet. Der erste und der zweite Messwert werden unter Verwendung einer Referenzwindturbine erhalten, an der erste und zweite Sensoren angebracht sind. Ein dritter Sensor ist an der in Betrieb befindlichen Windturbine angebracht und entspricht vom Typ und dem Anbringungsort dem ersten Sensor. Unter Verwendung der Übertragungsfunktion wird ein Übertragungsfunktionswert berechnet, der einem vom dem dritten Sensor erhaltenen Messwert entspricht. Anschließend wird die Ermüdungsbeanspruchung der in Betrieb befindlichen Windturbine basierend auf dem berechneten Übertragungsfunktionswert berechnet.

### ZUSAMMENFASSUNG DER ERFINDUNG

Die vorliegende Erfindung stellt ein Verfahren zur Zustandsüberwachung eines Rotorblatts gemäß Patentanspruch 1 bereit. Ferner stellt die vorliegende Erfindung eine Vorrichtung angepasst zur Zustandsüberwachung eines Rotorblatts einer Windkraftanlage gemäß Patentanspruch 8 bereit.

Gemäß einer Ausführungsform wird ein Verfahren zur Zustandsüberwachung eines Rotorblatts einer Windkraftanlage zur Verfügung gestellt. Das Verfahren beinhaltet: messen einer Beschleunigung des Rotorblatts mit einem ersten Signal, wobei die Beschleunigung an einer ersten radialen Position in einem vorbestimmten Abstand von der Rotorblattwurzel in zumindest einer Richtung beinhaltend eine ersten Richtungskomponente senkrecht zur Achse des Rotorblatts gemessen wird, messen einer Dehnung des Rotorblatts mit einem zweiten Signal, wobei die Dehnung an einer zweiten radialen Position angeordnet im Bereich von der ersten radialen Position zu der Rotorblattwurzel gemessen wird, bestimmen einer ersten Positionsänderung an der ersten radialen Position anhand der Beschleunigung, bestimmen eines zur Rotorblattsteifigkeit oder zur Rotorblattelastizität korrespondierenden ersten Wertes durch Berechnung mittels der ersten Positionsänderung und der Dehnung, und ermitteln des Rotorblattzustandes aus dem ersten Wert.

Gemäß einer weiteren Ausführungsform wird eine Vorrichtung angepasst zur Zustandsüberwachung eines Rotorblatts einer Windkraftanlage zur Verfügung gestellt. Die Vorrichtung beinhaltet: zumindest einem Beschleunigungssensor angepasst zur Messung einer Beschleunigung des Rotorblatts, wobei die Beschleunigung in zumindest einer Richtung beinhaltend eine erste Richtungskomponente senkrecht zur Achse des Rotorblatts gemessen wird, zumindest ein Dehnungssensor angepasst zur Messung einer Dehnung des Rotorblatts mit einem zweiten Signal, wobei die Dehnung an einer zweiten radialen Position angeordnet im Bereich von einer ersten radialen Position des Beschleunigungssensors bis zu der Rotorblattwurzel gemessen wird, und eine Auswerteeinheit, die mit dem zumindest einen Beschleunigungssensor zum Empfang eines ersten Signals von dem Beschleunigungssensor und die mit dem zumindest einen Dehnungssensor zum Empfang eines zweiten Signals von dem Dehnungssensor verbunden ist, und wobei der Empfang des ersten Signals von der ersten radialen Position in einem vorbestimmten Abstand von der Rotorblattwurzel erfolgt, wobei die Auswerteeinheit angepasst ist, eine erste Positionsänderung an der ersten radialen Position anhand des ersten Signals des Beschleunigungssensors zu bestimmen, und wobei die Auswerteeinheit angepasst ist, einen zur Rotorblattsteifigkeit oder zur Rotorblattelastizität korrespondierenden ersten Wert durch Berechnung mittels der ersten Positionsänderung und des zweiten Signals zu bestimmen.

### KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:
- Figuren 1 und 2: zeigen Kurven zur Veranschaulichung der Abhängigkeit der Steifigkeit oder einer analogen Größe bzw. eines korrespondierenden Wertes vom Zustand eines Rotorblatt und anderen Parametern, sowie erläutert die für Ausführungsformen der Erfindung verwendeten Information;
- Figur 3: zeigt schematisch ein Rotorblatt mit einer Anordnung bzw. eine Vorrichtung angepasst zur Zustandsüberwachung eines Rotorblatts einer Windkraftanlage gemäß hier beschriebenen Ausführungsformen;
- Figuren 4 und 5: zeigen eine Windkraftanalage und einen Rotor zur Erläuterung der für Ausführungsformen verwendeten Transformationen von Signalen und Werten;
- Figur 6: zeigt schematisch einen exemplarischen Verlauf eines Beschleunigungssignals;
- Figur 7: zeigt schematisch eine entsprechende Auswertung des Signals aus Fig. 6;
- Figur 8: zeigt schematisch eine weitere Auswertung des Signals aus Fig. 6;
- Figuren 9A und 9B: zeigen schematisch Beschleunigungssensoren zur Verwendung in hier beschriebenen Ausführungsformen; und
- Figur 10: zeigt ein Ablaufdiagram eines Verfahrens zur Zustandsüberwachung eines Rotorblatts einer Windkraftanlage gemäß Ausführungsformen der Erfindung.

In den Zeichnungen bezeichnen gleiche Bezugszeichen gleiche oder funktionsgleiche Komponenten oder Schritte.

### WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

Gemäß Ausführungsformen der Erfindung wird zur Überwachung bzw. Bestimmung eines Zustandes eines Rotorblatts ein Dehnungssensor, insbesondere ein athermaler Dehnungssensor, in Kombination mit einem oder mehreren Beschleunigungssensoren verwendet. Gemäß typischen Ausführungsformen werden faseroptische Beschleunigungssensoren und faseroptische Sensoren verwendet.

Ein oder mehrere Beschleunigungssensoren können zum Beispiel etwa auf halbem Radius entlang der Länge des Rotorblattes angebracht werden. Durch das Beschleunigungssignal des Sensors kann die Verschiebung bzw. Verbiegung des Blattes durch Integration berechnet werden. Dehnungssensoren können in der Blattwurzel angebracht werden. Aus den Signalen der Dehnungssensoren lässt sich das auf das Blatt wirkende Biegemoment berechnen. Der Quotient des Biegemoments mit der Verschiebung ist proportional zur Steifigkeit des Rotorblatts. Die Steifigkeit des Werkstoffs des Rotorblatts kann als Maß für den Zustand bzw. die Festigkeit des Werkstoffs des Rotors angesehen werden. Dabei nimmt die Festigkeit ab, wenn einzelne Fasern in einem Faserverbundwerkstoff reißen oder die Verklebung der Fasern delaminiert. Somit lässt sich eine in situ Messung des Blattzustandes mit den beschriebenen Anordnungen bzw. Verfahren durchführen. Dabei ermöglicht die in situ Messung eine verbesserte Erkennung von Alterung, Materialermüdung oder ähnlichen kritischen Zuständen im Vergleich zu einer Abschätzung über die Anzahl der Lastzyklen.

Figur 1 zeigt einen Graphen 10. In der Kurve 13 ist auf der Achse 11 die Steifigkeit als Funktion der Zeit bzw. der Anzahl der Lastzyklen aufgetragen. Dabei entspricht Achse 12 der Zeit bzw. der Anzahl der Lastzyklen. Kurve 13 zeigt, dass bei Beginn der Verwendung eines Rotorblatts die Steifigkeit zunächst abnimmt, um dann über einen längeren Zeitraum annähernd konstant zu bleiben. Dieser konstante Wert ist durch Hilfslinie 20 markiert. Am Ende der Lebensdauer eines Rotorblatts nimmt die Steifigkeit relativ stark ab. Wie oben beschrieben, kann dies durch Reißen einzelner Fasern im Faserverbundwerkstoff oder durch delaminieren der Verklebung und der Fasern hervorgerufen werden. Die Abnahme der Steifigkeit von ca. 10 % bis 20 %, was durch Hilfslinie 22 dargestellt ist, leitet typischerweise den Bruch des Rotorblatts ein. Dies muss frühzeitig erkannt werden, um den sicheren Betrieb einer Windkraftanlage zu ermöglichen.

Die Messanordnung und das Messverfahren mit Sensoren, typischerweise faseroptischen Sensoren, gemäß Ausführungsformen der vorliegenden Erfindung ermöglicht eine Messgenauigkeit im Bereich von 1%, was zur Erkennung des Abfalls am Ende des Lebenszyklus ausreichend ist. Jedoch führen auch Einflüsse wie Temperatur und Feuchtigkeit zu Schwankungen im Bereich von 1%. Dies ist in Figur 2 dargestellt, wobei Graph 32 die Steifigkeit als Funktion der Temperatur zeigt. Die Temperatur ist hier beispielhaft dargestellt und eine ähnliche Abhängigkeit kann auch für die Feuchtigkeit bzw. andere Einflüsse dargestellt werden. Gemäß typischen Ausführungen der vorliegenden Erfindung wird bei den Messverfahren in einer Einlernphase die Abhängigkeit von Temperatur, Feuchtigkeit und/oder anderen Parametern ermittelt. Diese Einlernphase ist in Figur 1 durch Bereich 30 gekennzeichnet. Durch die Einlernphase zu Beginn der Verwendung des Rotorblatts kann der Einfluss der Parameter wie Temperatur, Feuchtigkeit, usw. bestimmt werden. Dadurch kann der Einfluss dieser Größen bei der späteren Messung berücksichtigt werden, so dass Schwankungen der Steifigkeit basierend auf diesen Größen nicht zu einer Messunsicherheit führen.

Gemäß weiteren Ausführungsformen, die mit anderen hier beschriebenen Ausführungsformen kombiniert werden können kann eine Mittelung von Messwerten über mehrere Stunden bis mehrere Tage erfolgen, da der Zustand eines Rotorblatts einer Windkraftanlage sich nur langsam ändert. Eine Mittelung kann zum Beispiel über 1 Stunde bis 5 Tage, insbesondere 12 Stunden bis 3 Tage erfolgen.

Figur 3 zeigt ein Rotorblatt 50 einer Windkraftanlage. Das Rotorblatt 50 hat eine Achse 52 und ein dazu ausgerichtetes Koordinatensystem, das heißt ein blattfestes Koordinatensystem, das in Figur 3 exemplarisch durch die y- und die z-Achse dargestellt ist. Das Rotorblatt 50 aus Figur 3 ist mit einer Anordnung 300 zur Zustandsüberwachung des Rotorblatts ausgestattet. Die Anordnung 300 aus Figur 3 beinhaltet 3 Dehnungssensoren 302 und einen Beschleunigungssensor 312. Die Dehnungssensoren und der Beschleunigungssensor sind mit einer Auswerteeinheit 322 verbunden. Die Dehnungssensoren 302 sind an der Blattwurzel 54 des Rotorblatts 50 angebracht. Der Beschleunigungssensor 312 ist an einer Position 56, die ungefähr auf der halben Länge des Rotorblatts 50 ist, angebracht. Gemäß typischen Ausführungsformen können der oder die Dehnungssensoren mit einem axialen Abstand zur Blattwurzel von 5 m oder darunter angebracht sein. Gemäß weiteren typischen Ausführungsformen, die mit anderen hier beschriebenen Ausführungsformen kombiniert werden können, kann der oder die Beschleunigungssensoren in einem Bereich von ±5 m in axialer Richtung von der Blattmitte angebracht sein. Hierbei bezieht sich axialer Abstand bzw. axialer Richtung auf die Längsachse 52 des Rotorblatts 50. Gemäß noch weiteren Ausführungsformen kann der oder die Beschleunigungssensoren in einem Bereich von der Mitte des Rotorblattes hin zur Spitze des Rotorblattes angebracht sein.

Mittels der Dehnungssensoren 302 kann das auf das Blatt wirkende Biegemoment ermittelt werden. Gemäß Ausführungsformen der vorliegenden Erfindung wird zumindest ein Dehnungssensor 302 verwendet, so dass das Biegemoment in eine Richtung ermittelt werden kann. Gemäß weiteren typischen Ausführungsformen können zumindest 3 Dehnungssensoren 302 bzw. zumindest 4 Dehnungssensoren 302 verwendet werden, um ein Biegemoment in der y-z-Ebene des in Figur 3 dargestellten Koordinatensystems zu ermitteln. Bei geeigneter Anordnung von 2 Dehnungssensoren, zum Beispiel an unterschiedlichen Winkelkoordinaten der Blattwurzel, können die Biegemomente in 2 Richtungen, typischerweise 2 orthogonalen Richtungen, die auf das Rotorblatt wirken auch mit 2 Sensoren gemessen werden. Hierzu sollten die 2 Sensoren typsicherweise mit um 90° gedrehten Winkelkoordinaten angebracht sein, bzw. nicht mit um 180° gedrehten Winkelkoordinaten angebracht sein.

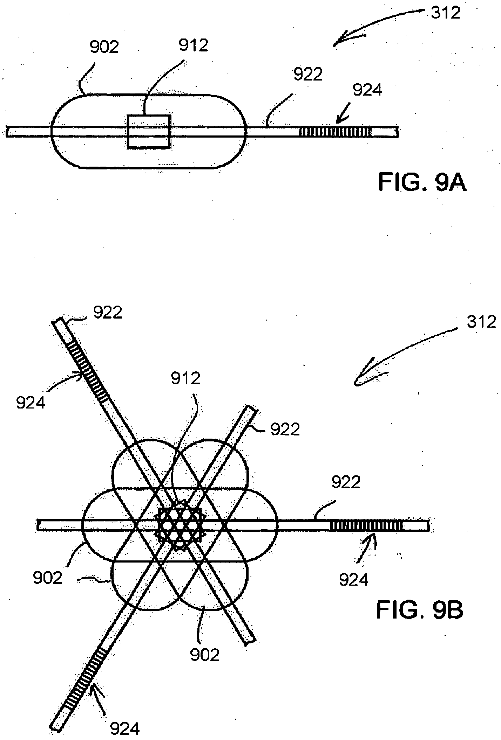

Der Beschleunigungssensor 312, der in den Figuren 9A und 9B näher erläutert wird, beinhaltet eine Testmasse, deren Beschleunigung im Sensor gemessen wird. Gemäß typischen Ausführungsformen können verwendete Dehnungssensoren und/oder verwendete Beschleunigungssensoren faseroptische Sensoren sein. Hierbei wird die Dehnung bzw. die Beschleunigung der Testmasse durch Faser-Bragg-Gitter in einer Faser optisch gemessen. Durch die Verwendung dieser Sensoren kann die oben beschriebene Messgenauigkeit zur Verfügung gestellt werden. Ferner bieten diese Sensoren vorteilhafte Eigenschaften zur Verwendung in Windkraftanlagen.

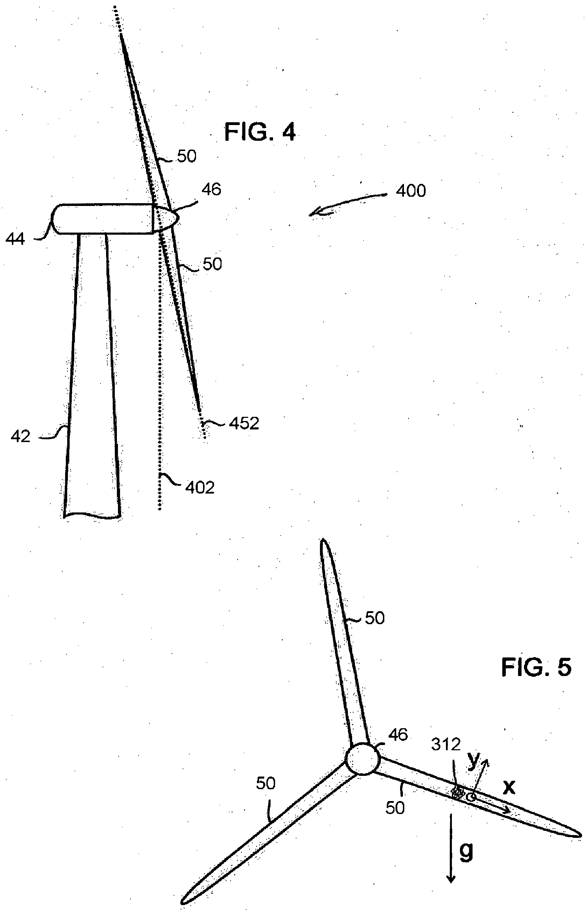

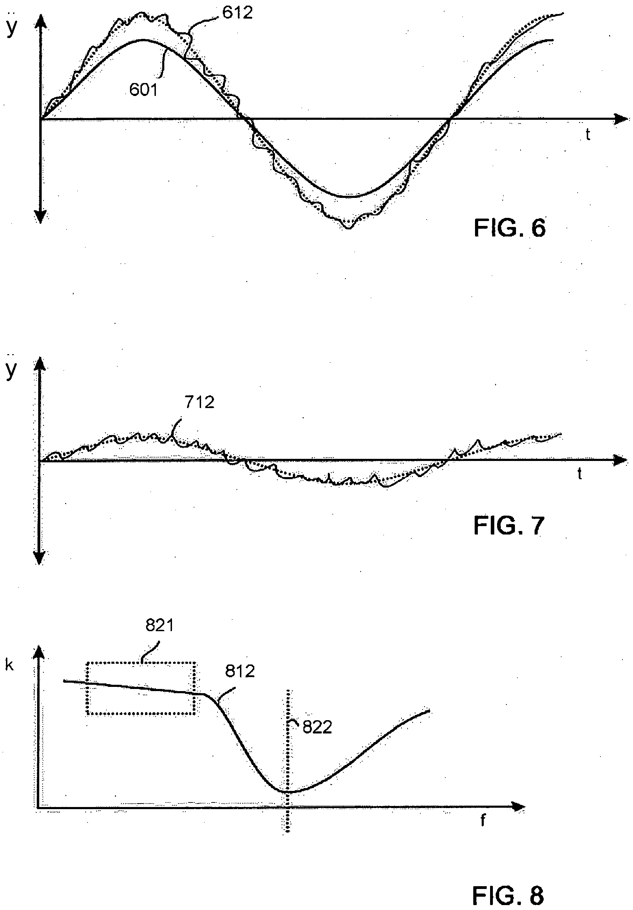

Die Verwendung der Sensoren 302 und 312 bzw. deren Anordnung zueinander und das Zusammenspiel der Auswerteeinheit 322 zur Überwachung eines Zustandes eines Rotorblatts wird unter Bezugnahme auf die Figuren 4 und 5 bzw. unter Bezugnahme auf die Signale und Werte, die in den Figuren 6 und 7 dargestellt sind, näher erläutert. Figur 4 zeigt einen Teil einer Windkraftanlage 400. Auf einem Turm 42 ist eine Gondel 44 angeordnet. An einer Rotornabe 46 sind Rotorblätter 50 angeordnet, so dass der Rotor (mit der Rotornabe und den Rotorblättern) in einer, durch Linie 452 dargestellten Ebene rotiert. Typischerweise ist diese Ebene relativ zu der Senkrechten 402 geneigt. Figur 5 zeigt eine Vorderansicht der Rotorblätter 50 und der Rotornabe 46 in Richtung der Rotationsachse, wobei Koordinaten x und y im blattfesten Koordinationssystem, die Gravitationskraft bzw. Gravitationsbeschleunigung g, sowie der Sensor 312 dargestellt sind.

Bei einer Rotation des Rotors der Windenergieanlage misst der Beschleunigungssensor 312 unter anderem die Gravitationsbeschleunigung g, die in Figur 6 durch Kurve 601 dargestellt ist. Diese Gravitationsbeschleunigung wird im Koordinatensystem gemäß Figur 5 in y-Richtung und in x-Richtung gemessen. Durch die Neigung des Rotors, die in Figur 4 dargestellt ist, wird im Koordinatensystem in Figur 5 auch in z-Richtung die Gravitationsbeschleunigung zu einem gewissen Maß einem Signal überlagert sein. Das in Figur 6 dargestellte Messsignal 612, welches typischerweise in der in Figur 5 eingezeichneten y-Richtung gemessen wird, ist dem Gravitationssignal überlagert. Durch Bereinigung des Messsignals vom Gravitationssignal erhält man das in Figur 7 dargestellte Signal 712.

Steuerungen moderner Windkraftanlagen beinhalten typischerweise eine sogenannte Pitch-Regelung, wobei das Rotorblatt um die in Figur 3 dargestellte Achse 52 gedreht wird. Demzufolge ändert sich in einem blattfesten Koordinationssystem die in Figur 5 dargestellte y-Richtung während einer Rotation des Rotorblatts 50 um die Achse 52.

Bei der Betrachtung der von einem Beschleunigungssensor 312 gemessenen Beschleunigung, die den Einfluss der Gravitationsbeschleunigung auf eine Testmasse beinhaltet, bedarf es zur verbesserten Bewertung der Signale einer Betrachtung der verschiedenen Koordinatensysteme. Zum einen existiert ein blattfestes Koordinatensystem. Dieses ist in Figur 3 dargestellt. Bei einer Rotation des Rotorblatts um die Achse 52 rotiert das Koordinatensystem sowie die Sensoren 302 und der Sensor 312. Darüber hinaus existiert ein Koordinatensystem welches fest in Bezug auf die Rotornabe 46 ist. Dabei handelt es sich um ein rotierendes Koordinatensystem, welches unabhängig von einer Pitch-Regelung verwendet werden kann. Ferner existiert ein ortsfestes Koordinatensystem, welches fest in Bezug auf die Windenergieanlage 400 und somit fest in Bezug auf die Gravitationskraft bzw. Gravitationsbeschleunigurig ist.

Gemäß typischen Ausführungsformen wird zur Korrekter des oder der Signale des Beschleunigungssensors und/oder der Dehnungssensoren, d.h. eines Signals in x-, y-und z-Richtung im blattfesten Koordinatensystem, eine Transformation in das ortsfeste Koordinatensystem durchgeführt, wobei die Rotation des Rotors, der Pitch-Winkel des Rotorblatts sowie die Neigung des Rotors, die durch die Linien 452 und 402 in Figur 4 dargestellt ist, berücksichtigt werden. Im ortsfesten Koordinatensystem kann das Signal von der Gravitationsbeschleunigung bereinigt werden. Anschließend kann eine Rücktransformation in das Koordinatensystem, welches fest in Bezug auf die Rotornabe ist, durchgeführt werden. In diesem Koordinatensystem, welches fest in Bezug auf die Rotornabe ist, wird typischerweise eine Beschleunigung im Wesentlichen parallel zur Windrichtung oder im Wesentlichen parallel zur Rotationsachse des Rotors ermittelt, die im Folgenden als *z̃* bezeichnet wird, und eine Beschleunigung y ermittelt, die senkrecht zu z ist, und im Wesentlichen der Tangentialgeschwindigkeit des Rotorblatts entspricht. Eine Beschleunigung entlang der in Figur 5 dargestellten x-Richtung bzw. einer Richtung *x̃* ist in vielen relevanten Anwendungsfällen für die Auswertung vernachlässigbar.

Gemäß typischen Ausführungsformen wird das Signal oder werden die Signale, die mit einer Beschleunigung korrespondieren, über die Zeit integriert, insbesondere zweifach über die Zeit integriert, um eine Verschiebung, Positionsänderung bzw. Ortsänderung des Beschleunigungssensor und damit der entsprechenden Verschiebung bzw. Ortsänderung der Rotorblattposition zu bestimmen. Hierbei wird dem Beschleunigungssensor ein Ort am Rotorblatt zugewiesen. Der Sensor misst die Beschleunigung an diesem Ort des Rotorblatts. Diese Beschleunigung ergibt sich aus der Gravitationsbeschleunigung, durch die Rotation des Rotors, und durch Bewegungen, d.h. Verformungen des Rotorblatts. Durch Integration des Signals nach der Zeit (2-fach) erhält man die Verschiebung dieses Ortes bzw. die Positionsänderung dieses Ortes. Die Verschiebung dieses Ortes im Sinne einer Vektorverschiebung der Ortskoordinate dieses Ortes bzw. die Positionsänderung diese Ortes im Sinne von neuen Ortskoordinaten x', y' und z' durch den Zusammenhang x'=x+Δx, y'=y+Δy, und z'=z+Δz, wobei der Vektor (Δx, Δy, Δz) die Positionsänderung angibt, wird hier synonym verwendet.

Bei einer vorbestimmten Krafteinwirkung bzw. bei der Wirkung eines bestimmten Moments ist die Dehnung, d.h. eine Verschiebung bzw. Ortsänderung, proportional mit dieser über das Elastizitätsmodul bzw. die Biegesteifigkeit verbunden. Anhand der in Figur 3 dargestellten Dehnungssensoren 302 kann das auf das Blatt eingebracht die Biegemoment bestimmt werden. Somit lässt sich durch den Wert der Verschiebung bzw. Positionsänderung und den Wert des Biegemoments ein Maß für die Steifigkeit bzw. die Elastizität des Rotorblatts bestimmen. Hierbei ist der Quotient aus dem Biegemoment und der Verschiebung, d.h. Biegemomente durch Verschiebung, proportional zur Steifigkeit. Dieser Wert wird gemäß Ausführungsformen der vorliegenden Erfindung, die mit anderen Ausführungsformen kombiniert werden können, gemäß dem in Figur 1 dargestellten Zusammenhang, zur Zustandsüberwachung eines Rotorblatts in einer Windenergieanlage verwendet.

Gemäß Ausführungsformen der Erfindung wird die Beschleunigung in zumindest einer Richtung, bevorzugt in der oben beschriebenen Richtung, die im Wesentlichen parallel zur Tangentialgeschwindigkeit des Rotorblattes ist, gemessen. Bei einem für den normalen Betrieb vorbekannten Pitch-Winkel, d.h. einer typischen oder vermehrt auftretenden Pitch-Stellung, kann dies durch entsprechende Montage eines eindimensionalen Beschleunigungssensor im Rotorblatt, d.h. im blattfesten Koordinatensystem, zur Verfügung gestellt werden. Ein Biegemoment in korrespondierender bzw. entsprechender Richtung, d.h. paralleler Richtung, kann durch geeignete Montage eines Dehnungssensors 302 ebenfalls zur Verfügung gestellt werden. Daher kann gemäß Ausführungsformen der vorliegenden Erfindung eine Zustandsüberwachung mit einem eindimensionalen Beschleunigungssensor und einem Dehnungssensoren erfolgen. Gemäß typischen Ausführungsformen wird eine Beschleunigung jedoch in 3 Richtungen gemessen und eine Dehnung bzw. eine Biegemoment durch zumindest 2 Dehnungssensoren entlang beliebigen Ausrichtung in der Ebene der Blattwurzel ermittelt. Hierdurch kann eine Überwachung unabhängig vom Pitch-Winkel bzw. entlang mehrerer Koordinaten in einem beliebigen Koordinatensystem erfolgen. Die Berechnung entlang mehrerer Koordinaten kann zu einer zuverlässigeren Zustandsüberwachung führen. Darüber hinaus können bei Kenntnis typischer Ausrichtungen von Verschleiß bzw. Bruch von Rotorblättern diese Richtungen insbesondere überwacht werden.

Figur 6 zeigt ein typisches Beispiel für ein Signal des oder der Beschleunigungssensoren in Richtung y, d.h. in einem Koordinatensystem welches ortsfest zur Rotornabe ist. Nach Korrektur des Einflusses der Gravitation (601 in Figur 6) erhält man ein Wert 712, wie er in Figur 7 dargestellt ist. Dieser Verlauf kann zweifach über die Zeit integriert werden, um die Verschiebung des Rotorblatts an der entsprechenden Position, die mit der Position des Beschleunigungssensors korrespondiert, zu messen. Der durch die gepunktete Linie in Figur 7 dargestellte sinusförmige Verlauf entspricht dabei einer Ortsänderung der Position im Rotorblatt, die durch die auf die Masse des Rotorblatts wirkende Gravitationsbeschleunigung hervorgerufen wird. In anderen Worten: es verbiegt sich das Rotorblatt unter seiner Eigenlast.

Signale des bzw. der Beschleunigungssensoren in *x̃* Richtung, d.h. parallel zur Rotationsachse des Rotors, zeigen typischerweise ein dynamisches Verhalten mit hohen Frequenzanteilen, die zum Beispiel durch Windböen hervorgerufen werden. Typischerweise können die Beschleunigungssignale nach ihren Frequenzanteilen gefiltert werden, wobei zum Beispiel ein Tiefpassfilter eingesetzt werden kann. Figur 8 zeigt eine Fourier Transformation, wobei die Steifigkeit k über die Frequenz f aufgetragen ist. Die Kurve 812 zeigt einen typischen Verlauf mit einem quasi statischen Bereich 821 und eine Eigenfrequenz 822. Dabei kann gemäß typischen Ausführungsformen ein Tiefpassfilter für Frequenzen von 0,6 Hz oder darunter, typischerweise von 0,4 Hz und darunter, auf die Signale bzw. Werte der Sensoren angewendet werden. Bei einer Umdrehungsgeschwindigkeit von zum Beispiel 0,2 Hz ergibt diese Filterung für das in Figur 7 dargestellte Signal einen im Wesentlichen glatten Sinusverlauf.

Gemäß weiteren typischen Ausführungsformen können Signale im Bereich der Eigenfrequenz 822 genutzt werden. Diese liegt zum Beispiel im Bereich von 0,8 Hz bis 1,2 Hz. Im Bereich der Eigenfrequenz erfährt das Rotorblatt größere Positionsverschiebungen, die zu einer verbesserten Messgenauigkeit führen können. Da die Auswertung der Signale durch das komplexere Verhalten des Rotorblatts jedoch schwieriger ist, kann gemäß einer bevorzugten Ausführungsform eine Auswertung mit einem Tiefpassfilter und einem Bandpassfilter in der Nähe der Eigenfrequenz getrennt voneinander durchgeführt werden. Durch die Auswertung in beiden Frequenzbereichen, d.h. durch eine zusätzliche Auswertung im Bereich der Eigenfrequenz, kann jedoch zusätzliche Informationen verwendet werden und somit eine verbesserte Messgenauigkeit erzielt werden.

Die in den hier beschriebenen Anordnung und Verfahren verwendeten Beschleunigungssensoren 312 werden nun in Bezug auf Figur 9A und 9B beschrieben. Figur 9A zeigt einen Beschleunigungssensor 312 wobei eine Testmasse 912 an einer optischen Fasern 922 angebracht ist. Ein Gehäuse 902 ist derart ausgestaltet, dass bei einer Beschleunigung der Masse 912 eine Dehnung, d.h. eine relative Längenänderung (Verlängerung oder Verkürzung) der optischen Faser 922 eintritt. Durch die Dehnung der Faser 922 wird das Faser-Bragg-Gitter 924 verändert. Dies führt zu einer veränderten Reflexion bzw. Transmission des Faser-Bragg- Gitters in Bezug auf die reflektierten bzw. transportierten Wellenlängen. Diese Änderung kann als Maß für die Dehnung der Faser und somit indirekt als Maß für die Beschleunigung der Testmasse 912 verwendet werden. In Figur 9B ist ein Beschleunigungssensor 312 dargestellt. Diese Anordnung kombiniert 3 der in Figur 9A gezeigten Sensoren, wobei die Rotation der Sensoren in Illustration eine dreidimensionale Anordnung darstellen soll, so dass 3 Beschleunigungswerte in einem Koordinatensystem, wie zum Beispiel einem kartesischen Koordinatensystem, gemessen werden.

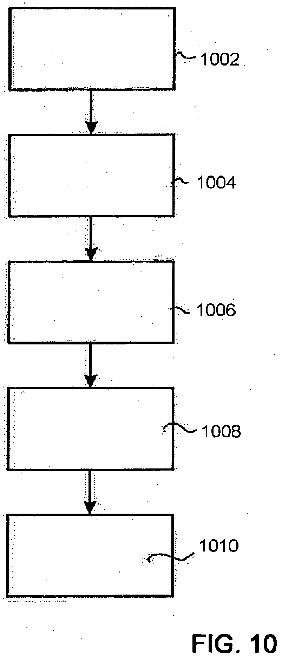

Figur 10 zeigt ein Ablaufdiagramm für Verfahren zur Zustandsüberwachung von Rotorblättern in einer Windkraftanlage gemäß hier beschriebenen Ausführungsformen. In Schritt 1002 wird eine Beschleunigung des Rotorblatts mittels eines ersten Signals gemessen. Hierbei wird zumindest eine Richtungskomponente senkrecht zur Achse des Rotorblatts gemessen. In Schritt 1004 wird eine Dehnung mit einem zweiten Signal gemessen. Aus dem ersten Signal für die Beschleunigung wird in Schritt 1006 eine Positionsänderung des Beschleunigungssensors bestimmt, die einer Positionsänderung der entsprechenden Rotorblattposition entspricht. Durch Berechnungen, für die die Positionsänderung und die Dehnung verwendet werden, kann in Schritt 1008 ein Maß vor die Rotorblatt Steifigkeit bzw. Rotorblatt Elastizität erhalten werden. Dieses Maß wird in Schritt 1010 zur Überwachung des Rotorblatts Zustandes verwendet.

Gemäß typischen Ausführungsformen wird zur Bestimmung der Positionsänderung am Ort des Beschleunigungssensors eine zweifache Integration über die Zeit verwendet. Typischerweise wird die Beschleunigung in 3 Richtungen, zum Beispiel Richtungen eines kartesischen Koordinatensystems, gemessen und die Dehnung zumindest in 2 Richtungen, so dass auch hier eine Dehnung mit beliebiger Ausrichtung in der Ebene der Blattwurzel ermittelt werden kann. Für die Zustandsüberwachung kann weiterhin eine Mittelwertbildung über einen Zeitraum von 1 Stunde oder mehr, insbesondere eine Mittelwertbildung über einen Zeitraum von einem Tag oder mehr durchgeführt werden. Hierdurch erhöht sich die Messgenauigkeit und der Zustand des Rotorblatts kann in ausreichendem Maße, d.h. rechtzeitig, erkannt werden. Gemäß weiteren typischen Ausführungsformen, die mit anderen hier beschriebenen Ausführungsformen kombiniert werden können, werden für die Messung der Beschleunigung bzw. der Dehnung Faser optische Sensoren verwendet, wobei insbesondere Sensoren, mit einem Faser-Bragg-Gitter verwendet werden können. Es werden zum Beispiel faseroptische Beschleunigungssensoren in Kombination mit faseroptischen Dehnungssensoren eingesetzt. Typischerweise werden für Ausführungsformen der hier beschriebenen Anordnungen und Verfahren ein Dehnungssensoren an oder in der Nähe der Blattwurzel und ein Beschleunigungssensor mit einem axialen Abstand zur Blattwurzel, der mindestens die Hälfte des Blattradius ist, verwendet.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1. Verfahren zur Zustandsübcrwachung eines Rotorblatts einer Windkraftanlage, umfassend:
messen einer Beschleunigung des Rotorblatts (50) mit einem ersten Signal, wobei die Beschleunigung an einer ersten radialen Position in einem vorbestimmten Abstand von der Rotorblattwutzcl (54) in zumindest einer Richtung beinhaltend eine ersten Richtungskomponente senkrecht zur Achse (52) des Rotorblattes gemessen wird;
messen einer Dehnung des Rotorblatts (50) mit einem zweiten Signal, wobei die Dehnung an einer zweiten radialen Position angeordnet im Bereich von der ersten radialen Position zu der Rotorblattwurzel (54) gemessen wird;
bestimmen einer ersten Positionsänderung anhand der Beschleunigung;
bestimmen eines zur Rotorblatfsteifigkeit korrespondierenden ersten Wertes durch Berechnung mittels der ersten Positionsänderung und der Dehnung; und
ermitteln des Rotorblattzustandes aus dem ersten Wert.

2. Verfahren gemäß Anspruch 1, wobei zum Bestimmen der ersten Positionsänderung das Signal der Beschleunigung über die Zeit integriert wird.

3. Verfahren gemäß einem der Ansprüche 1 bis 2, wobei die Beschleunigung in drei Richtungen gemessen wird und wobei die Dehnung gemessen wird, um Biegemomente in zwei, typischerweise orthogonalen, Richtungen zu messen.

4. Verfahren gemäß einem der Ansprüche 1 bis 3, wobei zum Ermitteln des Rotorblattzustandes der erste Wert gemittelt wird, insbesondere über einen Zeitraum von 1 Stunde und mehr gemittelt wird.

5. Verfahren gemäß einem der Ansprüche 1 bis 4, wobei die Beschleunigung mit beinem faseroptischen Beschleunigungssensor (312) gemessen wird und/oder wobei die Dehnung mit einem faseroptischen Dehnungssensor (302) gemessen wird.

6. Verfahren gemäß einem der Ansprüche 1 bis 5, wobei die erste radiale Position etwa auf halben Blattradius oder zwischen dem halben Blattradius und einer Spitze des Rotorblatts (50) ist und/oder wobei die zweite radiale Position in einem Abstand von der Blattwurzel (54) von 5 m oder weniger ist.

7. Verfahren gemäß einem der Ansprüche 1 bis 6, wobei zum Bestimmen des ersten Wertes eine Koordinatentransformation in ein Koordinatensystem der Windkraftanlage und/oder in ein Koordinatensystem der Rotornabe (46) erfolgt.

8. Vorrichtung angepasst zur Zustandsüberwachung eines Rotorblatts einer Windkraftanlagc, umfassend:
zumindest einem Beschleunigungssensor (312) angepasst zur Messung einer Beschleunigung des Rotorblatts (50), wobei die Beschleunigung in zumindest einer Richtung beinhaltend eine erste Richtungskomponente senkrecht zur Achse (52) des Rotorblatts (50) gemessen wird;
zumindest ein Dehnungssensor (302) angepasst zur Messung einer Dehnung des Rotorblatts (50) mit einem zweiten Signal, wobei die Dehnung an einer zweiten radialen Position angeordnet im Bereich von einer ersten radialen Position des Beschleunigungssensor (312) bis zu der Rotorblattwurzel (54) gemessen wird;
eine Auswerteeinheit (322), die mit dem zumindest einen Beschleunigungssensor (312) zum Empfang eines ersten Signals von dem Beschleunigungssensor (312) und die mit dem zumindest einen Dehnungssensor (302) zum Empfang eines zweiten Signals von dem Dehnungssensor (302) verbunden ist, und wobei der Empfang des ersten Signals von der ersten radialen Position in einem vorbestimmten Abstand von der Rotorblattwurzel (54) erfolgt;
wobei die Auswerteeinheit (322) angepasst ist, eine erste Positionsänderung an der ersten radialen Position anhand des ersten Signals des Beschleunigungssensors (312) zu bestimmen;
wobei die Auswerteeinheit (322) angepasst ist, einen zur Rotorblattsteifigkeit korrespondierenden ersten Wert durch Berechnung mittels der ersten Positionsänderung und des zweiten Signals zu bestimmen.

9. Vorrichtung gemäß Anspruch 8, wobei der zumindest eine Beschleunigungssensor (312) ein faseroptischer Sensor ist und/oder wobei der zumindest eine Dehnungssensor (302) ein faseroptischer Dehnungssensor ist.

10. Vorrichtung gemäß einem der Ansprüche 8 bis 9, wobei die erste radiale Position im Bereich vom halben Blattradius bis zur Blattspitze ist und/oder wobei die radiale zweite Position in einem Abstand von der Blattwurzel (54) von 5 m oder weniger ist.

## Claims

1. Method for monitoring the state of a rotor blade of a wind turbine, comprising:
measuring an acceleration of the rotor blade (50) with a first signal, wherein the acceleration is measured at a first radial position at a predetermined distance from the rotor blade root (54) in at least one direction comprising a first directional component orthogonal to the axis (52) of the rotor blade;
measuring a strain of the rotor blade (50) with a second signal, wherein the strain is measured at a second radial position disposed in the area of the first radial position to the rotor blade root (54);
determining a first positional change on the basis of the acceleration;
determining a first value corresponding to the rotor blade stiffness by means of calculation on the basis of the first positional change and the strain; and
determining the rotor blade state from the first value.

2. The method of claim 1, wherein, for determining said first positional change, the signal of the acceleration is integrated over time.

3. The method of any one of claims 1 to 2, wherein the acceleration is measured in three directions, and wherein the strain is measured in order to measure bending moments in two, typically orthogonal, directions.

4. The method of any one of claims 1 to 3, wherein, for determining the rotor blade state, said first value is averaged, in particular averaged over a time period of 1 hour and longer.

5. The method of any one of claims 1 to 4, wherein the acceleration is measured by means of a fiber-optic acceleration sensor (312) and/or wherein the strain is measured by means of a fiber-optic strain sensor (302).

6. The method of any one of claims 1 to 5, wherein the first radial position is located approximately at half the blade radius or in between half the blade radius and a rotor blade (50) tip and/or wherein the second radial position is located at a distance of 5 meters or less from the blade root (54).

7. The method of any one of claims 1 to 6, wherein for determining said first value, a coordinate transformation into a coordinate system of said wind turbine and/or into a coordinate system of the rotor hub (46) is performed.

8. Device for monitoring the state of a rotor blade of a wind turbine, comprising:
at least one acceleration sensor (312) adapted to measure an acceleration of the rotor blade (50), wherein the acceleration is measured in at least one direction comprising a first directional component orthogonal to the axis (52) of the rotor blade (50);
at least one strain sensor (302) adapted to measure of a strain of the rotor blade (50) with a second signal, wherein the strain is measured at a second radial position disposed in the area of a first radial position of the acceleration sensor (312) to the rotor blade root (54);
an evaluation unit (322) connected to the at least one acceleration sensor (312) for receiving a first signal from the acceleration sensor (312) and connected to the at least one strain sensor (302) for receiving a second signal from the strain sensor (302), and wherein the reception of the first signal is performed from the first radial position at a predetermined distance from the rotor blade root (54);
wherein the evaluation unit (322) is adapted to determine a first positional change at the first radial position on the basis of the first signal of the acceleration sensor (312);
wherein the evaluation unit (322) is adapted to determine a first value corresponding to the rotor blade stiffness by means of calculation on the basis of the first positional change and the second signal.

9. The device according to claim 8, wherein the at least one acceleration sensor (312) is a fibre-optic sensor, and/or wherein the at least one strain sensor (302) is a fibre-optic strain sensor.

10. The device of any one of claims 8 to 9, wherein the first radial position is located within the range of half the blade radius to the blade tip and/or wherein the second radial position is located at a distance of 5 meters or less from the blade root (54).

## Revendications

1. Procédé de surveillance d'état d'une pale de rotor d'une éolienne, comprenant :
mesure d'une accélération de la pale de rotor (50) avec un premier signal, sachant que l'accélération au niveau d'une première position radiale est mesurée à un écart prédéterminé par rapport à la racine de pale de rotor (54) dans au moins une direction contenant une première composante de direction perpendiculaire à l'axe (52) de la pale de rotor ;
mesure d'un allongement de la pale de rotor (50) avec un deuxième signal, sachant que l'allongement au niveau d'une deuxième position radiale est mesurée à un emplacement disposé dans la zone allant de la première position radiale à la racine de pale de rotor (54) ;
détermination d'un premier changement de position sur la base de l'accélération ;
détermination d'une première valeur correspondant à la rigidité de pale de rotor par calcul moyennant le premier changement de position et l'allongement ; et
détermination de l'état de pale de rotor à partir de la première valeur.

2. Procédé selon la revendication 1, sachant que pour la détermination du premier changement de position, le signal de l'accélération est intégré dans le temps.

3. Procédé selon l'une des revendications 1 à 2, sachant que l'accélération est mesurée dans trois directions et sachant que l'allongement est mesuré pour mesurer des couples de flexion dans deux directions, typiquement perpendiculaires.

4. Procédé selon l'une des revendications 1 à 3, sachant que pour la détermination de l'état de pale de rotor, la première valeur est moyennée, en particulier moyennée sur une période de 1 heure et plus.

5. Procédé selon l'une des revendications 1 à 4, sachant que l'accélération est mesurée avec un capteur d'accélération (312) à fibres optiques et/ou sachant que l'allongement est mesuré avec un capteur d'allongement (302) à fibres optiques.

6. Procédé selon l'une des revendications 1 à 5, sachant que la première position radiale se trouve environ à mi-rayon de pale ou entre le mi-rayon de pale et une pointe de la pale de rotor (50) et/ou sachant que la deuxième position radiale se trouve à un écart de 5 m ou moins de la racine de pale (54).

7. Procédé selon l'une des revendications 1 à 6, sachant que pour la détermination de la première valeur, une transformation de coordonnées dans un système de coordonnées de l'éolienne et/ou dans un système de coordonnées du moyeu de rotor (46) est effectuée.

8. Dispositif apte à la surveillance d'état d'une pale de rotor d'une éolienne, comprenant :
au moins un capteur d'accélération (312) apte à mesurer une accélération de la pale de rotor (50), sachant que l'accélération est mesurée dans au moins une direction contenant une première composante de direction perpendiculaire à l'axe (52) de la pale de rotor (50) ;
au moins un capteur d'allongement (302) apte à mesurer un allongement de la pale de rotor (50) avec un deuxième signal, sachant que l'allongement au niveau d'une deuxième position radiale est mesuré à un emplacement disposé dans la zone allant d'une première position radiale du capteur d'accélération (312) à la racine de pale de rotor (54) ;
une unité d'évaluation (322) qui est reliée à l'au moins un capteur d'accélération (312) pour la réception d'un premier signal depuis le capteur d'accélération (312) et à l'au moins un capteur d'allongement (302) pour la réception d'un deuxième signal depuis le capteur d'allongement (302), et sachant que la réception du premier signal depuis la première position radiale est effectuée à un écart prédéterminé par rapport à la racine de pale de rotor (54) ;
sachant que l'unité d'évaluation (322) est apte à déterminer un premier changement de position au niveau de la première position radiale sur la base du premier signal du capteur d'accélération (312) ;
sachant que l'unité d'évaluation (322) est apte à déterminer une première valeur correspondant à la rigidité de pale de rotor par calcul moyennant le premier changement de position et le deuxième signal.

9. Dispositif selon la revendication 8, sachant que l'au moins un capteur d'accélération (312) est un capteur à fibres optiques et/ou sachant que l'au moins un capteur d'allongement (302) est un capteur d'allongement à fibres optiques.

10. Dispositif selon l'une des revendications 8 à 9, sachant que la première position radiale se trouve dans la zone allant du mi-rayon de pale ou à la pointe de pale et/ou sachant que la deuxième position radiale se trouve à un écart de 5 m ou moins de la racine de pale (54).
